# EUROPEAN PATENT APPLICATION

(11) **EP 3 815 954 A1**
(43) Date of publication of application: **05.05.2021**
(21) Application number: 20162855.9
(22) Date of filing: 12.03.2020
(51) Int. Cl.: B60L 8/00

(54) **SELF-POWERED RECHARGE SYSTEM AND METHOD**

(30) Priority: 04.11.2019 US 201916673053
(71) Applicant: Luoma, Ruth, Calgary, Alberta T2A 3N6 (CA)
(72) Inventor: Luoma, Ruth, Calgary, Alberta T2A 3N6 (CA)
(74) Representative: Schulz Junghans Patentanwälte PartGmbB

(57) **Abstract**

A self-powered recharge system and method for battery operated vehicles. The self-powered recharge system includes a vehicle driven by a motor that utilizes a plurality of assemblies for recovering energy to a power source of the vehicle. The system includes a wind capturing assembly having a turbine disposed within pass through areas of the vehicle and is operably connected to the power source. The system also includes a kinetic recapture assembly having a gear operably connected to a component of the vehicle, wherein the component is selected from at least one of: an axle and a driveshaft. The kinetic recapture assembly is able to recover energy from a braking operation and is used to re-charge the power source. In one embodiment, the recharge system further provides a solar panel and thermal recapture assembly including a Rankine cycle device.

## Description

### BACKGROUND OF THE INVENTION

The present invention relates to self-powered recharge systems. More specifically, the present invention relates to a self-powered recharge system and method configured to capture energy created by the vehicle and capture energy from external sources, such as wind and solar.

Most vehicles utilize internal combustion, electrical motors, or a hybrid combination of both the internal combustion engine and electric motor to move the vehicle. These vehicles require an initial and continuing fuel source to provide the needed energy to move the vehicle. In recent years, the industry is trending towards electrical vehicles that utilize an on-board battery as the power source. Plug-in electric vehicles, whether of the hybrid electric type or of the purely electric type, are configured to use electrical energy from an external source to recharge the energy storage devices. Although the range of these electric vehicles are increasing due to advances in battery technology, they nonetheless require significant period of recharge time.

Electric vehicles typically utilize multiple energy storage devices such as low voltage batteries (for range and cruising, for example), high voltage batteries (for boost and acceleration, for example), and ultracapacitors (for boost and acceleration, for example), to name a few. Because these energy storage devices operate under different voltages and are charged differently from one another, typically each storage device includes its own unique charging system. Further, these electric vehicles have different storage capacities, different operating voltages from one another, and have different charging needs.

However, existing electric vehicles lack charging systems that harness energy from the vehicle or the surrounding environment in a manner that provides for charging of the battery. Moreover, these systems fail to provide for harnessing of electrical energy at different voltages for the multiple energy storage devices of the electric vehicle.

At times, these electric vehicle utilize systems to increase battery efficiency and lessen battery usage. For example, some vehicles are equipped with engines or motors that dissipate kinetic energy during stopping through use of friction brakes and engine compression braking, rather than capturing and storing the energy for reuse. During braking, the motors operate as generators to retard the vehicle and convert the vehicle's kinetic energy to electricity which is stored in batteries. This power can then be used to power the motors and move the vehicle.

Other known systems that are alternative to battery storage, include flywheels and compressed air. Implementation of systems based on these alternative modes of energy storage have been hobbled by the limitations of the recapture and utilization mechanisms.

Moreover, these existing devices fail to provide a vehicle self-powered recharge system having a wind capturing assembly for capturing wind energy during movement of the vehicle, kinetic recapture assembly operably connected to an axel or driveshaft of the vehicle for drawing energy during times of braking or non-acceleration, a thermal recapture assembly that collects heat energy otherwise wasted from the motor of the vehicle, and a solar panel for collecting solar energy.

In light of the devices disclosed in the known art, it is submitted that the present invention substantially diverges in design elements and methods from the known art and consequently it is clear that there is a need in the art for an improvement for a self-powered recharge system and method for a vehicle. In this regard the instant invention substantially fulfills these needs.

### SUMMARY OF THE INVENTION

In view of the foregoing disadvantages inherent in the known types of self-powered recharge system and methods now present in the known art, the present invention provides a new self-powered recharge system and method wherein the same can be utilized for battery operated vehicles.

It is one objective of the present invention to provide a self-powered recharge system comprising a vehicle comprising a body and driven by a motor, wherein a wind capturing assembly comprising a turbine disposed within pass through areas of the vehicle is operably connected to a power source. A kinetic recapture assembly comprises a gear operably connected to a component of the vehicle, wherein the component is selected from at least one of: an axle and a driveshaft. The kinetic recapture assembly is adapted to recover energy from a braking operation and is used to re-charge the power source.

It is another objective of the present invention to provide a self-powered recharge system having a solar panel configured to provide electrical power to the power source.

It is another objective of the present invention to provide a self-powered recharge system wherein the alternator is configured to provide electrical power to the power source.

It is another objective of the present invention to provide a self-powered recharge system and method that collects electrical energy at different voltages for the multiple energy storage devices of the electric vehicle.

It is yet another objective of the present invention to provide a self-powered recharge system and method that become active under certain conditions as detected by the various sensors.

It is therefore an object of the present invention to provide a new and improved self-powered recharge system and method that has all of the advantages of the known art and none of the disadvantages.

Other objects, features and advantages of the present invention will become apparent from the following detailed description taken in conjunction with the accompanying drawings.

### BRIEF DESCRIPTIONS OF THE DRAWINGS

Although the characteristic features of this invention will be particularly pointed out in the claims, the invention itself and manner in which it may be made and used may be better understood after a review of the following description, taken in connection with the accompanying drawings.

Reference will now be made in detail to the exemplary embodiment (s) of the invention. References to "one embodiment," "at least one embodiment," "an embodiment," "one example," "an example," "for example," and so on indicate that the embodiment(s) or example(s) may include a feature, structure, characteristic, property, element, or limitation but that not every embodiment or example necessarily includes that feature, structure, characteristic, property, element, or limitation. Further, repeated use of the phrase "in an embodiment" does not necessarily refer to the same embodiment. Additionally, "battery" or "batteries" may be used interchangeably with "power source", "energy storage devices", "low voltage batteries", "high voltage batteries", and "capacitors", and the like.

As used herein, "computer-readable medium" or "memory" excludes any transitory signals, but includes any non-transitory data storage circuitry, e.g., buffers, cache, and queues, within transceivers of transitory signals. As used herein, "logic" refers to (i) logic implemented as computer instructions and/or data within one or more computer processes and/or (ii) logic implemented in electronic circuitry.
FIG. 1 shows a side view of an embodiment of the self-powered recharge system for recharging a vehicle.
FIG. 2 shows a diagram view of an embodiment of the vehicle self-powered recharge system.

### DETAILED DESCRIPTION OF THE INVENTION

Reference is made herein to the attached drawings. For the purposes of presenting a brief and clear description of the present invention, the preferred embodiment will be discussed as used for providing electrical power to the power source of a vehicle, wherein the electrical power has been captured from the vehicle and the surrounding environment. The figures are intended for representative purposes only and should not be considered to be limiting in any respect.

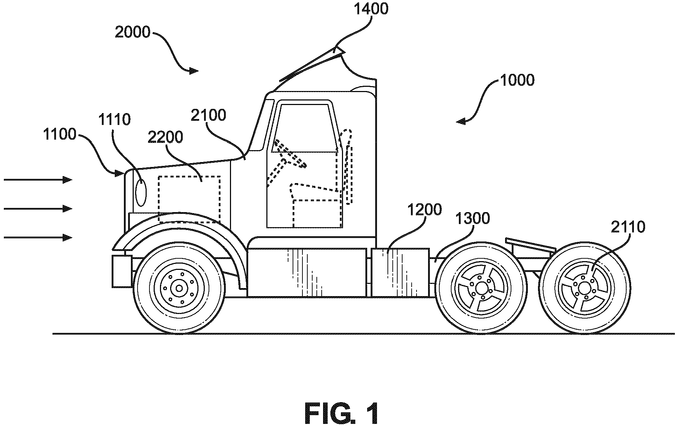

Referring now to FIG. 1, there is shown a side view of an embodiment of the self-powered recharge system for recharging a vehicle. The self-powered recharge system for recharging a vehicle 1000 may be incorporated into a vehicle 2000 when the vehicle 2000 is manufactured or, in alternative embodiments, be retrofitted onto the vehicle 2000 after initial manufacturing of the vehicle 2000. In the shown embodiment, the shown vehicle 2000 is a tractor trailer. However, in alternative embodiments, the vehicle 2000 may be an automobile, such as a truck, bus, off-road vehicle, a train, or any other transportation vehicle. The vehicle 2000 generally includes a motor 2200 adapted to drive the vehicle and a body 2100 having a power source 1200, drivetrain, and/or a structure for housing passengers, goods, and the like.

In one embodiment, the self-powered recharge system 1000 for recharging a vehicle 2000 comprises a wind capturing assembly 1100, a kinetic recapture assembly 1300, and a solar panel 1400. The wind capturing assembly 1100 includes a turbine 1110, such as a fan, disposed within pass through areas of the vehicle 2000. In one embodiment, the turbine 1110 comprises a horizontal axis turbine having plurality of blades extending from a central point and each blade extending radially therefrom. In this configuration, the turbine 1110 includes a front face that is oriented towards a front of the vehicle 2000, such that forward motion of the vehicle 2000 causes rotation of the turbine about the center point. The turbine 1110 is operably connected to the power source 1200 of the vehicle 2000, such that the turbine 1110 is adapted to provide electrical power thereto. In one embodiment, an alternator converts the mechanical motion of the turbine 1110 into electrical energy usable by the power source 1200. In alternative embodiments, the turbine 1110 comprises any horizontal-axis turbine or vertical axis turbine.

In one embodiment, the turbine 1110 is located within the body 2100 of the vehicle, such as within the radiator housing at the front of the vehicle 2000. However, in alternative embodiments, an air scoop is provided to allow airflow to pass through the vehicle body 2100 and interact with the turbine 1110.

In one embodiment, the kinetic recapture assembly 1300 comprises a gear 1310 operably connected to a component 2110 of the vehicle 2000 such that the component 2110 is operably connected to the either an axle 2120 or a driveshaft 2130. In one embodiment, the drivetrain of the vehicle 2000 connects a transmission to the axle 2120.

In operation, the kinetic recapture assembly 1300 is adapted to engage the component 2110 to recover energy from a braking operation of the vehicle 2000 and used to re-charge energy storage. In one embodiment, the kinetic recapture assembly 1300 captures a portion of the kinetic energy in a moving vehicle 2000 during deceleration. As the vehicle is decelerating, the electric motor 2200 of the vehicle 2000 is used to provide a kinetic braking force and is operated as a generator used to generate electrical energy to recharge the energy storage system 1200. In any embodiment, the kinetic recapture assembly 1300 converts mechanical energy to electrical energy via an alternator 2300. The alternator 2300 is configured to provide electrical power to the power source 1200. In another embodiment, a separate generator may also be used to provide the braking force as opposed to the electric drive motor 2200 of the vehicle. The electrical energy produced by the regenerative system is stored in the vehicle power source 1200 and is used to power the vehicle's electric motor to increase the effective range.

In one embodiment, the self-powered recharge system 1000 includes a solar panel 1400 disposed on an exterior side of the vehicle 2000. The solar panel 1400 is configured to provide electrical power to the power source. In the shown embodiment, the solar panel 1400 is disposed on an air damp of the tractor trailer vehicle 2000. However, in alternative embodiments, the solar panel 1400 may be disposed on the front hood/engine compartment, the trailer, or any exterior side of the vehicle 2000.

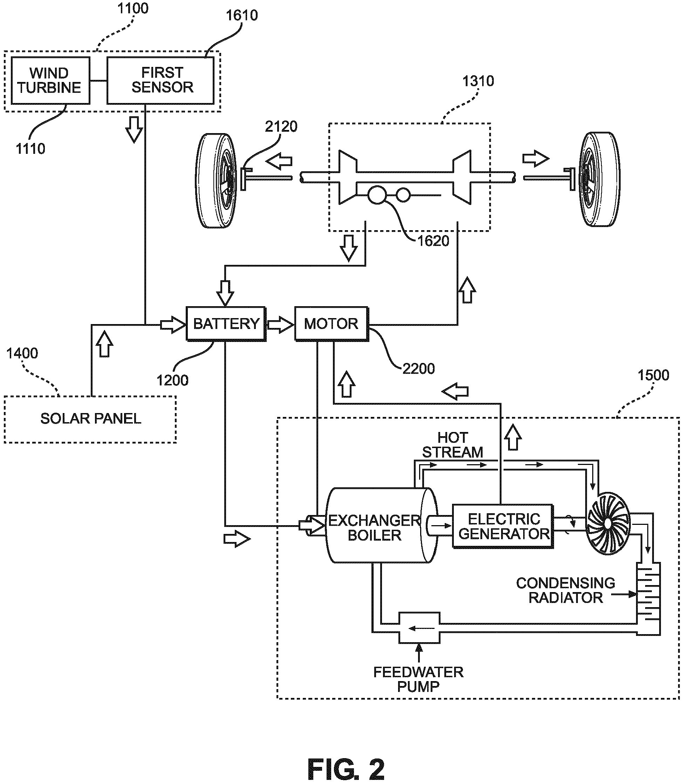

Referring now to FIG. 2, there is shown a diagram view of an embodiment of the vehicle self-powered recharge system. In the shown embodiment, the electrical vehicle comprises the wind capturing assembly 1100, the kinetic recapture assembly 1200, a thermal recapture assembly 1500, and the solar panel 1400.

In one embodiment, the thermal recapture assembly 1500 comprises a Rankine cycle device that converts heat from the motor into electrical energy for the power source 1200. The thermal recapture assembly 1500 includes a high-pressure water pump that is adapted to force water into an evaporator, which converts the water into steam using the reaction heat of the catalyst. The steam is then passed to an expander that uses the steam to rotate an electric generator, which produces a current that is utilized to charge the vehicle's battery 1200. However, in alternative embodiments, the thermal recapture assembly 1500 may comprise any suitable system that captures excess thermal energy for battery power that would otherwise be dissipated in convention vehicles.

In one embodiment, the solar panel 1400 provides low voltage to the power source 1200. The low voltage may be utilized for other electrical power needs of the vehicle such an interior or exterior lighting, and the like. In one embodiment, the kinetic recapture assembly 1300 provide high voltage to the power source 1200.

In one embodiment, the vehicle self-powered recharge system 1000 is operated via a controller, whereby the controller includes a logic executed by a processor, that directs the charging of certain power sources 1200 upon the meeting of certain conditions. For example, the wind capturing assembly 1100 provides electrical energy to the power source 1200 when the vehicle is operating at medium or high speed and traveling for extended durations. In this context, "medium speed" is defined as between fifteen and thirty miles per hour, and "high speed" is defined equal or greater than thirty miles per hour. The wind capturing assembly 1100 is adapted to activate when a certain air velocity is detected above a threshold by a first sensor 1610. The first sensor is mounted to the vehicle and adapted to detect relative air velocity. In this way, when the threshold speed is meet, the turbine is adapted to produce electrical energy for the power source 1200.

In one embodiment, the self-powered recharge system 1000 comprises one or more sensors 1600. The one or more sensors 1610, 1620 are adapted to detect conditions of the vehicle and of the surrounding environment. For example, the kinetic recapture assembly 1300 is adapted to activate when an RPM of the component is detected above a threshold by a second sensor 1620. In one embodiment, the kinetic recapture assembly 1300 capture energy at speed equal or greater than thirty miles per hour. In one embodiment, the solar panel 1400 is adapted to capture energy while the vehicle is moving or is stationary.

In one embodiment, the thermal recapture assembly 1500 is adapted to collect heat energy when the vehicle is traveling at a low speed below fifteen miles per hour. In another embodiment, the thermal recapture assembly 1500 operates is adapted for continuous operation regardless of vehicle speed.

In one embodiment, the present invention provides a method of recharging a battery-operated vehicle with a self-powered recharge system, the method comprising: providing the self-powered recharge system including: a wind capturing assembly having a turbine disposed within pass through areas of the vehicle operably connected to a power source; a kinetic recapture assembly having a gear operably connected to a component of the vehicle, wherein the component is selected from at least one of: an axle and a driveshaft; wherein the kinetic recapture assembly is operably connected to an alternator, the alternator is configured to provide electrical power to the power source; a solar panel configured to provide electrical power to the power source; a controller having a logic, that when executed by a processor, is configured to control the wind capturing assembly and the kinetic recapture assembly. Further, the method comprises generating electrical energy at the wind capturing assembly when a first sensor detects a speed of the vehicle above a predetermined threshold and generating electrical energy at the wind capturing assembly when a second sensor detects a speed of an RPM of the component is detected above a predetermined threshold.

It is therefore submitted that the instant invention has been shown and described in what is considered to be the most practical and preferred embodiments. It is recognized, however, that departures may be made within the scope of the invention and that obvious modifications will occur to a person skilled in the art. With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. A recharge system for a vehicle with an on-board power source, comprising:
a vehicle comprising a body and driven by a motor;
a wind capturing assembly comprising:
a turbine disposed within pass through areas of the vehicle operably connected to the power source;
a kinetic recapture assembly comprising:
a gear operably connected to a component of the vehicle, wherein the component is selected from at least one of: an axle and a driveshaft;
wherein the kinetic recapture assembly is operably connected to an alternator, the alternator is configured to provide electrical power to the power source;
a solar panel configured to provide electrical power to the power source.

2. The recharge system of claim 1, wherein the wind capturing assembly is adapted to activate when an air velocity is detected above a threshold by a first sensor.

3. The recharge system of claim 2, wherein the wind capturing assembly is activated above 30 miles per hour.

4. The recharge system of claim 1, wherein the kinetic recapture assembly is adapted to activate when an RPM of the component is detected above a threshold by a second sensor.

5. The recharge system of claim 1, further comprising a thermal recapture assembly adapted to collect heat energy from the vehicle and provide electrical energy to the power source.

6. The recharge system of claim 5, wherein the thermal recapture assembly is a Rankine cycle device.

7. The recharge system of claim 6, wherein the Rankine cycle device includes a high-pressure water pump adapted to force water into an evaporator, which converts the water into steam using the heat energy, wherein the steam is in fluid communication with a volumetric expander that uses the steam to rotate an electric generator, which produces a current that is utilized to charge the power source.

8. The recharge system of claim 1, wherein the solar panel is located on a roof of the vehicle.

9. The recharge system of claim 1, wherein the vehicle is selected from the following: car, truck, or train.

10. A method of recharging a battery-operated vehicle with a self-powered recharge system, the method comprising:
providing the self-powered recharge system including:
a wind capturing assembly comprising:
a turbine disposed within pass through areas of the vehicle operably connected to a power source;
a kinetic recapture assembly comprising:
a gear operably connected to a component of the vehicle, wherein the component is selected from at least one of: an axle and a driveshaft;
wherein the kinetic recapture assembly is operably connected to an alternator, the alternator is configured to provide electrical power to the power source;
a solar panel configured to provide electrical power to the power source;
a controller having a logic, that when executed by a processor, is configured to control the wind capturing assembly and the kinetic recapture assembly;
generating electrical energy at the wind recapture assembly when a first sensor detects a speed of the vehicle above a predetermined threshold;
generating electrical energy at the kinetic recapture assembly when a second sensor detects a speed of an RPM of the component is detected above a predetermined threshold.
